# EUROPEAN PATENT APPLICATION

(11) **EP 2 329 875 A1**
(43) Date of publication of application: **08.06.2011**
(21) Application number: 10192919.8
(22) Date of filing: 26.04.2007
(51) Int. Cl.: B01D 53/62

(54) **Carbon dioxide capture and related processes**

(30) Priority: 27.04.2006 US 795419 P; 14.09.2006 US 844472 P
(62) Divisional of application: 07835735.7
(71) Applicant: President and Fellows of Harvard College, Cambridge, MA 02138 (US); THE PENN STATE RESEARCH FOUNDATION, University Park, PA 16802-7000 (US)
(72) Inventor: House, Kurt Z., Cambridge, MA 02139 (US); House, Christopher H., State College, PA 16803 (US); Aziz, Michael J., Concord, MA 01742 (US); Schrag, Daniel Paul, Cambridge, MA 02138 (US)
(74) Representative: HOFFMANN EITLE

(57) **Abstract**

Processes for capturing carbon dioxide are described. The carbon dioxide may be captured from the atmosphere and/or from the waste stream of a carbon dioxide point source (e.g., power plants, chemical plants, natural gas fields, oil fields, industrial sites, etc.). The processes can involve capturing carbon dioxide using alkaline solutions (e.g., NaOH). In some processes, the carbon dioxide may react with the alkaline solution to form a product (e.g., NaHCO₃). The alkaline solution may be made a number of different ways. In some of the processes, products produced during processing may be used to add value beyond carbon dioxide capture.

## Description

### Related Applications

This application claims priority to U.S. Provisional Patent Application Serial No. 60/795,419, filed April 27, 2006 and U.S. Provisional Patent Application Serial No. 60/844,472, filed September 14, 2006, the disclosures both of which are incorporated herein by reference.

### Field of Invention

The invention relates generally to the capture of carbon dioxide from the atmosphere and/or from point sources (e.g., power plants, chemical plants, natural gas fields, oil fields, industrial sites).

### Background of Invention

Due to the combustion of fossil fuels, the atmospheric concentration of carbon dioxide has steadily risen from ~280 ppm to over 380 ppm in the last 200 years. Concern about anthropogenic climate change has generated research into technologies that limit the CO₂ emissions from the combustion of fossil fuels and into technologies that remove CO₂ directly from the atmosphere.

### Summary of Intention

A process for capturing carbon dioxide from the atmosphere and/or from carbon dioxide point sources (e.g., power plants, chemical plants, natural gas fields, oil fields, industrial sites) is described. The process may involve reacting an alkaline solution with carbon dioxide.

In one aspect, a process for capturing carbon dioxide is provided. The process comprises providing water and processing the water to generate acidic solution species and alkaline solution: The process further comprises neutralizing the acidic solution, and capturing carbon dioxide from a source of carbon dioxide with the alkaline solution.

In one aspect, a process for capturing carbon dioxide and generating chlorine gas and hydrogen gas is provided. The process comprises providing water and processing the water to generate sodium hydroxide, chlorine gas, and hydrogen gas. The process further comprises capturing carbon dioxide from a source of carbon dioxide by reacting the carbon dioxide with the sodium hydroxide to form sodium bicarbonate and/or disodium carbonate.

In one aspect, a process for capturing carbon dioxide is provided. The process comprises providing a salt solution and processing the salt solution to generate a metal hydroxide and an acidic solution. The process further comprises capturing carbon dioxide from a source of carbon dioxide by reacting the carbon dioxide with the metal hydroxide to form a metal bicarbonate and/or metal carbonate.

In one aspect, a process for capturing carbon dioxide is provided. The process comprises providing water and adding ash obtained from a source of biomass to the water to form alkaline solution. The process further comprises capturing carbon dioxide from a source of carbon dioxide by with the alkaline solution.

Other aspects, embodiments, and features of the invention will become apparent from the following detailed description when considered in conjunction with the accompanying drawings. The accompanying figures are schematic and are not intended to be drawn to scale. For purposes of clarity, not every component is labeled in every figure. Nor is every component of each embodiment of the invention shown where illustration is not necessary to allow those of ordinary skill in the art to understand the invention.

### Brief Description of the Drawings

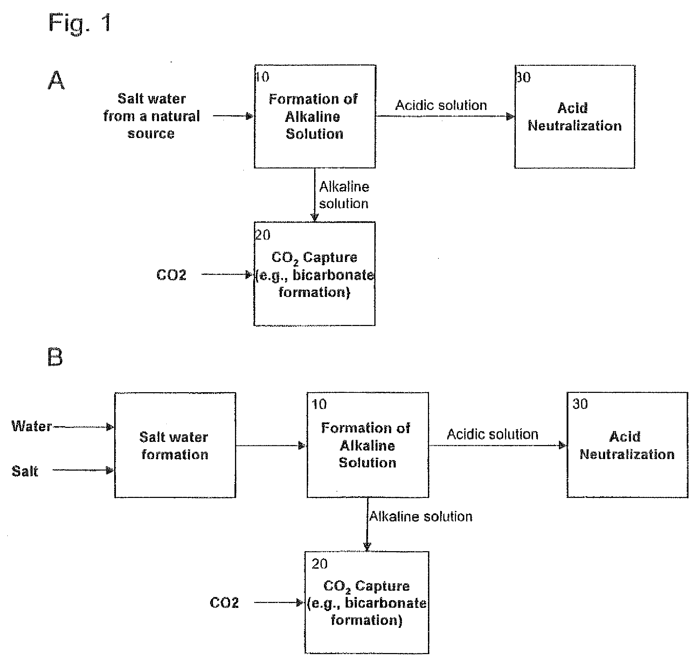

FIGS. 1 - 4 illustrate the steps of respective processes for capturing carbon dioxide according to embodiments of the invention.

### Detailed Description

Processes for capturing carbon dioxide are described. The carbon dioxide may be captured from the atmosphere and/or from the waste stream of a carbon dioxide point source (e.g., power plants, chemical plants, natural gas fields, oil fields, industrial sites, etc.). The processes can involve capturing carbon dioxide using alkaline solutions (e.g., NaOH). In some processes, the carbon dioxide may react with the alkaline solution to form a product (e.g., NaHC03). As described further below, the alkaline solution may be made a number of different ways. In some of the processes, products produced during processing may be used to add value beyond carbon dioxide capture, as described further below.

FIGS. 1-4 schematically illustrate general steps of the processes according to embodiments of the invention. FIG. 1 pertains to an embodiment of the invention in which an acidic species is neutralized. FIG. 2 shows an embodiment in which a sodium chloride solution is processed to produce sodium hydroxide (NaOH), chlorine gas (Cl₂), and hydrogen gas (H₂). FIG. 3 shows an embodiment in which a salt solution is processed, and acidic species and metal bicarbonate and/or metal carbonate are formed. FIG. 4 shows an embodiment in which biomass is added to water to form an alkaline solution.

It should be understood that the schematic processes shown in the figures are provided as examples though other processes are also within the scope of the present invention. The term "acidic species" refers to dissolved species (e.g., ions) that contribute to the acidity of a solution. The term "alkaline species" refers to dissolved species (e.g., ions) that contribute to the alkalinity of a solution.

Step 10 involves formation of an alkaline solution. Step 20 involves capturing carbon dioxide from the atmosphere and/or from the waste stream of a carbon dioxide point source. For example, the carbon dioxide may be captured by reacting it with the alkaline species in the solution produced in Step 10 and/or dissolving it in the alkaline solution produced in step 10, Step 30 (FIGS. 1A-1B) involves secondary processing of products produced during the process. The steps are further described below.
In step 10, any suitable technique may be used to form the alkaline solution (e.g., a hydroxide solution such as sodium hydroxide).

In some embodiments, step 10 (as shown in FIG. 1A) involves processing water having a sufficient concentration of ions from dissolved salts, for example, ions of chlorine, fluorine, bromine, sulfate, and nitrate, amongst others, to form the alkaline solution, as described further below. Water having a sufficient concentration of chlorine ions (e.g., from NaCI) may be particularly preferred in some cases. In some embodiments, it may be preferable that the ions are conservative ions (i.e., ions whose concentrations are independent of moderate changes in pH). In some embodiments, the water (e.g., "salt water" from an ocean or sea (FIG. 1A)) may naturally have a sufficient concentration of ions from dissolved salts. In other embodiments (FIG. 1B), it may be preferable to add appropriate anions to the water (e.g., "fresh water"). For example, halite (NaCI) or other types of salt may be added to the water. The water may be a river, lake, or aquifer and the salt may be a natural salt deposit.

In some embodiments, it may be preferable for the body (or source) of water to be large to provide a sufficient supply of water for the process. For example, the body of water may be an ocean, a sea, a lake, or a river. Water may be supplied from the body of water to a plant where the additional processing steps are performed.

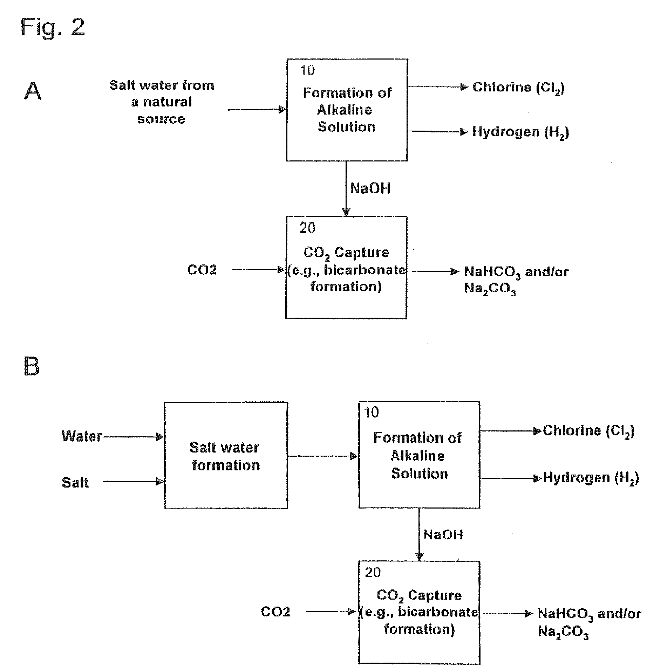

In some embodiments, step 30 (FIGS, 1A-1B) may not be necessary. For example, a salt solution may be processed for the co-produce sodium hydroxide (NaOH), chlorine gas (Cl₂), and hydrogen gas (H₂) (FIGS. 2A-2B). In such embodiments, there may be no acid to neutralize or further process. After the co-production of NaOH, Cl₂, and H₂, the NaOH can be reacted with CO₂ from a source of CO₂ (Step 20). The net process of the embodiment illustrated in FIG. 2 results in the co-production ofNaHCO₃ (and/or Na₂CO₃), Cl₂, and H₂. The Cl₂ and the H₂ can be sold or used for some other productive purpose. The net reaction associated the embodiment illustrated in FIG. 2 is:

NaCl + H₂O + CO₂ →NaHCO₃ +½Cl₂. + ½ H₂

The embodiments illustrated in FIGS. 1-3 involve the processing of a salt solution into an acidic solution and an alkaline (i.e., a basic) solution. In embodiments of the invention, any suitable technique may be used in the separation of a salt solution into an acidic and an alkaline (i.e., a basic) solution. These processes include electrochemical processes (e.g., electrolytic processes, Chloralkali type processes, processes involving diaphragm cells, processes involving membranes such as bipolar membrane etectrodialysis, or any other appropriate electrochemical process) and thermal processes. For example, by various known electrochemical processes water containing Na⁺ and Cl⁻ ions may be processed electrolytically to produce sodium hydroxide, chlorine gas, and hydrogen gas according to the following reaction:

Na+ + Cl⁻ + H₂O → Na⁺ + OH⁻ + ½Cl₂ +½ H₂

The embodiments illustrated in FIGS. 1-4 involve the reaction of CO₂ with the alkaline species and/or the dissolution of CO₂ into the solution including alkaline species. Whatever method (electrolytic, thermal, etc.) is employed to produce the acidic and alkaline solutions, the methods can involve neutralizing the alkaline species with CO₂. In the case that NaOH forms the alkaline species, then the final step produces NaHCO₃ solution and/or Na₂CO₃ solution. Therefore, embodiments of the invention may extend any known method of producing caustic soda (NaOH) to the production of sodium bicarbonate and/or disodium carbonate (thereby capturing CO₂) by adding one more processing step to the caustic soda. In some embodiments, the process involves the co-production of sodium bicarbonate (and/or disodium carbonate), chlorine gas, and hydrogen gas by reacting the NaOH co-produced with chlorine gas and hydrogen gas with CO₂ from a source of CO₂ for the purpose of capturing and storing CO₂ and carbonate and bicarbonate species. Therefore, one embodiment of the invention constitutes the co-production of NaHCO₃ solution and/or Na₂CO₃ solution with Cl₂ gas and H₂, gas with the capture of CO₂.

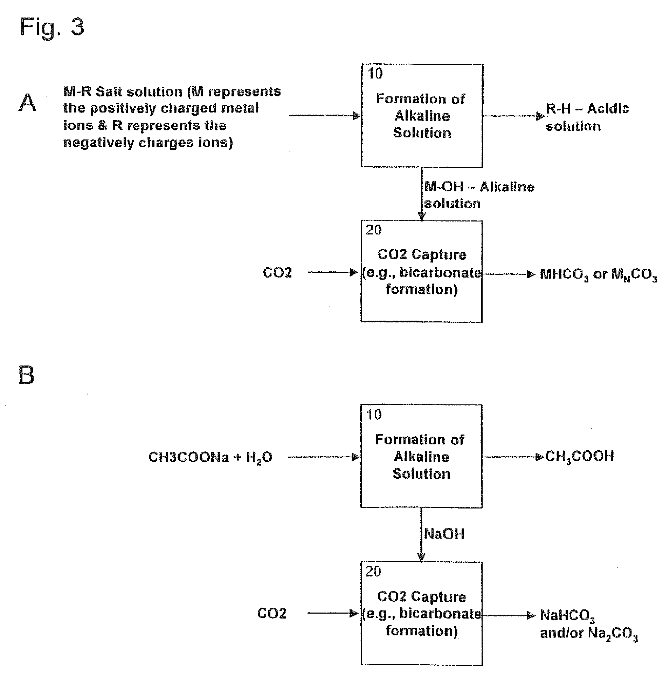

It should be understood that though the above description relates to Cl₂ and H₂, other suitable gases and corresponding acids may also be used in processes of the invention. In some embodiments (FIGS. 3A-3B), it may be preferable if chlorine is not produced when forming the alkaline solution. Thus, the products when forming the alkaline solution may be free of chlorine. The embodiments illustrated in FIG.3A involves the separation of any salt (e.g., an organic salt like sodium acetate (CH₃COONa) as depicted in FIG. 3B) into an acidic solution and an alkaline or basic solution. As an example, sodium hydroxide may be generated *without* using chlorine ions. In some of these embodiments, an organic acid (e.g., acetic acid, lactic acid, or formic acid) may be co-produced with sodium hydroxide:

CH₃COO⁻ + Na⁺+ H₂O → CH₃COOH + NaOH

The final step of the embodiments illustrated in FIGS. 3A-3B involves the reaction of the alkaline solution with CO₂ from a source of CO₂ for the purpose of capturing and storing the CO₂ as a carbonate or bicarbonate species.

Ultimately, the embodiments depicted in FIGS. 3A-3B illustrates the co-production of acid with metal bicarbonate or metal carbonate. In general, the embodiments illustrated in FIGS. 3A-3B involve the processing of a salt solution (e.g., sodium acetate) into an alkaline or basic solution (e.g., metal hydroxide solution) and an acidic solution. The acid may be sold on the open market while the hydroxide specie are reacted to CO₂ to form MHCO₃ or MCO₃, where M indicates the mental ion in the original salt. Such an embodiment demonstrates the co-production of acid and for the purpose of carbon dioxide capture. The general net reaction for such an embodiment is:

CO₂ + R-M + H₂O → MHCO₃ + R-H

In other embodiments, step 10 of FIGS. 1A-1B and 3A-3B may include an electrodialysis process such as electro-electrodialysis, salt splitting or bipolar membrane electrodialysis. These processes uses an applied voltage to drive opposite-charged ions in a salt solution in opposite directions through membranes engineered for high permeability of ions of a particular charge state. Charge-compensating ions are generated by the electrolysis of water, resulting in acid and base exit streams. A suitable process is described in electrodialysis Process With Bipolar Membranes (EDBM) in Environmental Protection - A Review", by Tongwen Xu, Resources, Conservation and Recycling (2002), which is incorporated herein by reference.

In some embodiments, as indicated by FIG. 3A, the process may involve co-production of sulfuric acid and sodium hydroxide. For example, the sulfuric acid may be produced from a reaction between metal sulfate salt (e.g., sodium sulfate ) and water. A bipolar membrane electrodialysis process may be used. A representative reaction is:

Na₂SO₄ + 2H₂O → 2NaOH + H₂SO₄

It should be understood that in any of the above reactions, sodium may be replaced with another suitable cation such as potassium.

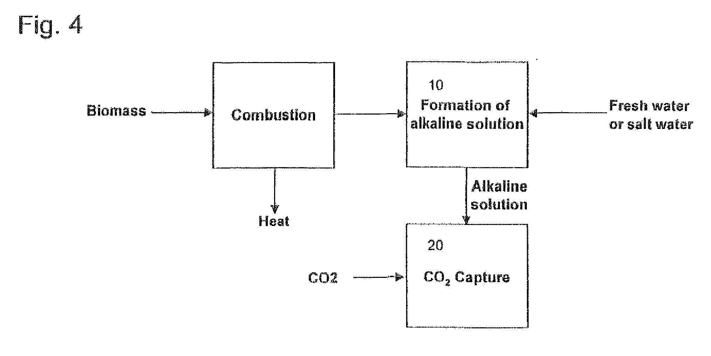

Other embodiments (e.g., as shown in FIG. 4) can involve creating the alkaline solution by adding ash from biomass burning or biomass gasification to a suitable body of water (e.g., "fresh water" or "salt water"). The ash can be a source of metal cations (e.g., Ca²⁺, Mg²⁺, K⁺, Na⁺) and carbonate ions (CO₃²⁻) An alkaline (i.e., basic) solution can be produced by dissolving the ash in any some form of water (Step 10, FIG. 4). The process further comprises capturing carbon dioxide from a source of carbon dioxide by reacting it with the alkaline solution to form the bicarbonate or carbonate species (Step 20, FIG, 4).

Step 20 involves capturing CO₂ using the alkaline solution produced in step 10. In some embodiments, CO₂ may be reacted with alkaline species through a spray tower. In some embodiments, step 20 involves adding the alkaline or basic solution (e.g., NaOH) produced in step 10 directly to a body of water (e.g., the ocean). In these embodiments, the process will increase the concentration of hydroxide ions and cations (e.g., in the form of NaOH) relative to the concentration of hydrogen ions and anions (e.g., in the form of HCl) in the body of water. In such an embodiment, the process will have increased the alkalinity of the body of water. The removal of anions from a body of water increases the alkalinity of the body of water because alkalinity is defined as the concentration difference between cations and anions:

Alkalinity = 2[Ca²⁺] + [K⁺] + 2[Mg²⁺] + [Na] - [Cl]- 2[SO₄²-]

The small excess charge of the cations over anions is mainly balanced by the concentrations of carbonate and bicarbonate ions. Increasing the alkalinity of the body of water causes a shift in the dissolved inorganic carbon (DIC) partitioning to balance the increase in positive conservative charge. That partitioning shift decreases the concentration of CO₂(aq), which is the fraction of DIC that is able to interact directly with the CO₂(g) in the atmosphere. As a result of decreasing the CO₂(aq) fraction of DIC, the surface water becomes under-saturated in CO₂(aq) and additional CO₂(g) dissolves from the atmosphere into the body of water. The quantity of additional atmospheric CO₂(g) that dissolves into the body of water is related to the increase in alkalinity. Therefore, in one embodiment of this invention, the removal and neutralization (step 30, FIGS. 1A-1B) of hydrochloric acid (HCl) from the ocean causes the water to remove CO₂(g) from the atmosphere. In this embodiment, the CO₂ that is removed from the atmosphere will be chemically stored in the body of water as dissolved organic carbon (CO₂(aq), HCO₃⁻, and CO₃²⁻).

In this manner, processes of the invention effectively accelerate the natural CO₂(g) uptake process of a body of water (e.g., an ocean). Additionally, the processes can enable mankind to better control the pH of bodies of water (e.g., an ocean). Currently, the uptake of anthropogenic CO₂ causes the pH of bodies of water to drop. Removal and neutralization (step 30, FIGS - 1A-1B) of acid (e.g., HCl) will cause the pH of surface water to rise, but the additional CO₂ that necessarily dissolves in the water will balance that rise in pH. By controlling the rate of removal from the water, the pH can be maintained while the concentration of atmospheric CO₂ is brought down to the desired level.

The embodiment of this invention illustrated in FIG. 4 can also be used to capture CO₂ by adding the ash-based alkaline solution to a body of water for the purpose of increasing the alkalinity of that water. In some cases, the body of water may be under-saturated with respect to calcite (CaCCO₃), though it should be understood that not all processes are so limited. When calcium based alkalinity is added to a body of water that is under-saturated with respect to calcite, the net result is the uptake of carbon dioxide from the atmosphere. Furthermore, using ash rich in magnesium, potassium, or sodium, the body of water used does not need to be under-saturated with respect to Calcite in order to have carbon dioxide capture and storage.

In some embodiments, step 20 involves reacting the alkaline solution (e.g., sodium hydroxide or other suitable alkaline solution) with carbon dioxide from the atmosphere to produce a reaction product (e.g., sodium bicarbonate and/or disodium carbonate, or other suitable compound). In processes of the invention, the reaction product is not used to re-generate the alkaline species which are used to capture carbon dioxide. That is, the reaction product is used for other purposes than re-generating alkaline species used to capture carbon dioxide. As described further below, the reaction product may be disposed of and/or otherwise further processed. For example, the reaction product may be disposed of by introducing the product into a suitable body of water (e.g., the ocean) or land-based environment (e.g., landfill, mine)

One representative reaction in which carbon dioxide reacts with alkaline species produced in step 10 is:

NAOH + CO_{2→} NaHCO₃

For example, to facilitate the reaction, a pool of highly concentrated sodium hydroxide (NaOH) may be collected, The pool may be exposed to the atmosphere causing the reaction to occur. In some processes, the sodium hydroxide (or other suitable compound) may be sold and shipped to a carbon dioxide point source (e.g., power plants, chemical plants, natural gas fields, oil fields, industrial sites, etc.). The waste stream produced by the carbon dioxide point source may be reacted with a concentrated pool of sodium hydroxide to cause the reaction to occur. The reaction of sodium hydroxide with carbon dioxide, thus, reduces the concentration of carbon dioxide in the atmosphere or in the waste stream of a carbon dioxide from a point source. The sodium bicarbonate and/or disodium carbonate that is formed from the reaction of the sodium hydroxide with the carbon dioxide may be added to the body of water, or otherwise collected and disposed.

The various embodiments illustrated in FIGS. 1 - 3 differ in how the non-alkaline products produced during the process are further processed. For example, in some embodiments (FIG. 2A-2B), the chlorine gas and/or hydrogen gas produced is sold on the open market. In other embodiments, the hydrogen gas produced may be combined with oxygen from the atmosphere to form water and useful energy according to the following reaction:

½H₂+¼ O_{2→}½H₂O

In some embodiments (FIGS. 1A-1B), the chlorine gas and hydrogen gas formed in step 10 may react to form HCl according to the following equation:

½ H₂ + ½Cl₂ → HCl

In some of these embodiments, the chlorine gas and hydrogen gas formed in step 10 may be combined in a fuel cell or a hydrogen gas turbine that produces either HCl(g) or HCl(aq) and electricity that can be harnessed for use in other processing steps or otherwise utilized. The application of the HCl fuel cell will likely be a valuable element of the process because the electricity produced in the fuel cell may substantially decrease of the operational costs.

The HCl produced in reaction by the combination of Cl₂ and H₂ can be removed for further processing (e.g., step 30, FIG. 1A-1B). Such processing can ensure that the acid is not returned to the body of water. For example, any chloride ion that returns to the body of water without a corresponding conservative cation can reverse gains achieved in the process by causing carbon dioxide to degas to the atmosphere. Therefore, the acid is typically disposed of in a way that effectively neutralizes the acid and/or combines its anions with conservative cations.

In some cases, step 30 of FIGS. 1A-1B involves reacting HCl (or other acid) with a reactive species. In general, any suitable reactive species may be used. In some embodiments, it is preferable that the source of the reactive species be a rock or mineral source. Suitable rock or mineral sources include all silicate mineral and/or rocks, mafic minerals (e.g., wustite, olivine, pyroxene, amphibole, biotite mica), magnetite, mafic and ultramafic rocks, serpentinites, basalts, and iron ores. In some cases, it may be preferred that the rock or mineral source comprise reduced iron. It should be understood that other reactive species not described herein may also be suitable

A variety of reactions may be used to safely dispose of the acid. The reactions may involve the dissolution of minerals by the acid to neutralize the acid and/or combine a chloride ion with a conservative cation. In some embodiments, the acid is disposed of in an exothermic reaction- For example, HCl may be disposed by reacting it with any suitable mineral and/or rock that neutralizes it and/or matches the chloride ions with conservative cations. For example, a silicate mineral or rock may be used to neutralize the HCl according to the following general reaction:

HCI + (silicate mineral/rock) → (chloride salts) + (silica rich mineral/rock) + H₂O

A specific example of the acid neutralization illustrated in step 30 of Fig. 1 involves using Mg₂SiO₄ to neutralize the HCl according to the following reaction:

Mg₂SiO₄ + 4HCl → 2MgCl₂ + SiO₂ + 2H₂O

It should be understood that step 30 of FIGS. 1A-1B may include the dissolution of any rock by HCl that combines the chlorine ions with conservative cations (e,g., Mg²⁺ Al²⁺, Al³⁺, Fe²⁺, Fe³⁺, K⁺, Ca²⁺, Na⁺ etc.). Once the HCl is reacted with the mineral and matches the cations to the chloride ions, then the system is complete and the body of water whose alkalinity was increased can permanently remove atmospheric CO₂(g). It should be noted that dissolution of minerals by HCl is typically an exothermic reaction and some of the heat generated during the dissolution may be recovered and used to run another part of the process.

In some embodiments of the invention, the acid is disposed of by reacting with rocks and/or minerals (e.g., silicate rocks and/or minerals) in a reaction vessel. In such embodiments, the rocks and/or minerals are transported to the reaction vessel. In some cases, the rocks and/or minerals may be processed to form smaller rocks and/or minerals. Once in the reaction vessel, the rocks and/or minerals are combined with the acid, and the dissolution of the rocks and/or minerals neutralizes the acid.

In other embodiments, the acid is neutralized through reaction with and/or dissolution of rocks and/or minerals in-situ (i.e., rocks and/or minerals in their natural location). In such processes, the acidic solution may be injected into or sprayed onto the rock and/or mineral (e.g., basaltic, ultramafic rock and/or mineral formation). In such processes, the acid can be neutralized when it contacts the rock and/or mineral formation, while flowing through and/or across the rock and/or mineral formation. The seepage flow may be engineered such that that time scale of acid flow through the rock and/or mineral formation would be slow relative to the timescale of the rock and/or mineral dissolution. If the timescales are appropriately engineered, then the acid will be largely neutralized when the dissolution products reach a body of water (e.g., the ocean).

In some embodiments, the acid is disposed of in an exothermic reaction and also generates additional useful energy. These embodiments, for example, may involve reacting the acid (e.g., HCl) with any suitable mineral or rock that contains reduced iron (F^{e}, Fe⁺, or Fe²⁺ ). The purpose of using reduced iron containing minerals and/or rocks is that the oxidation of the iron can be used to generate useful energy. For example, mafic and ultramafic rock, basalt, and certain iron ore all contain reduced iron. The acid (e.g., HCl) solution, can dissolve these minerals in reactions similar to the following dissolution reaction of HCl and olivine:

(Mg,Fe)₂SiO₄ + 4HCl → ²(Mg,Fe)Cl₂+ SiO₂ + 2H₂O

During the dissolution process, the following reaction will sometimes occur as the Fe²⁺ is oxidized to Fe³⁺ by the formation of H₂(g):

Fe₂SiO₄ + 6HCl → 2FeCl₃ + SiO₂ + 2H_{2O} + H₂

That reaction results in the production of H₂. In reactions similar to dissolution of olivine, it may be difficult to predict how much of the iron silicate will react with HCI to form FeCl₂ and how much of it will react with HCI to form FeCl₃. It is believed, however, that a subset of the Fe²⁺ will be oxidized to Fe³⁺ and that H₂ will form when Fe²⁺ is oxidized. The hydrogen gas that is generated can be used to generate electricity, or it can be sold on the open market. There is a wide variety of minerals that could be used for this process step (e.g., mafic and ultramafic rock, basalt, and/or iron ores) including those that contain reduced iron for the purpose of disposing of the acid and oxidizing the reduced iron.

In some embodiments, the fraction of the Fe²⁺ that is not oxidized during the dissolution reaction described above can be used in a fuel-cell to generate electricity by oxidizing the FeCl₂ to FeCl₃. Generally, the dissolution of any rock containing reduced iron with an acid will produce a solution of reduced iron cations, the anion from the acid, and H₂O. As an example, the dissolution of any rock containing reduced iron by HCI will produce some FeCl₂. Additionally, as described above, a portion of the Fe²⁺ will be oxidized to Fe³⁺, and when the Fe²⁺ is oxidized, then the H⁺ in solution will be reduced to H₂(g). As noted above, the portion of the Fe²⁺ that is not oxidized to Fe³⁺ forms FeCl₂, That FeCl₂ can be reacted with additional HCl and O₂ in a fuel-cell to fully oxidize the remaining Fe²⁺ to Fe³⁺, The overall fuel-cell reaction is described by the following net reaction:

4FeCl₂ + 4HC1 + O₂ → 4FeCl₃ + 2H₂O

The electrical energy generated from the oxidation of FeCl₂ to FeCl₃ can either be sold or used to run the process by producing more acid from seawater. The useful energy generated during the dissolution of minerals containing reduced iron can be used in other steps in the process.

In a different embodiment, a FeCl₂-O₂ fuel cell could be used that produce ferric hydroxide (Fe(OH)₃) as a product.

As noted above, step 30 of FIGS. 1A-1B may also involve processing other gaseous components removed from the body of water in addition to processing the acid removed. In these embodiments, step 30 may also involve processing one or more gases (e.g., Cl₂ and H₂) produced in step 10. In these cases, only a portion of those gases may be used to produce the acidic species. The remainder of the gases may be used to react with reactive species in step 30. In these embodiments, the reactive species (e.g., mineral or rock sources that contain iron) may be reacted with a mixture of the acid (HCI) and Cl₂; or a mixture of the acid, H₂ and Cl₂. Therefore, in these embodiments, the reactive species react with both an acid (e.g., HCI) and an oxidizing agent (e.g., Cl₂). The result is that any reduced metals (such as ferrous iron) are oxidized with chlorine gas during or after dissolution. These embodiments may simplify energy generation from the oxidation of ferrous sources.

Using the mafic olivine mineral fayalite (i.e., Fe₂SiO4) as an example, Fe₂SiO₄ is converted into FeCl₃, SiO₂, and H₂O during the reaction with HCI (i.e., the acid) and Cl₂ (i.e., the halogen gas). Depending somewhat on the conditions of the reaction, any hydrogen production from the dissolution of the ferrous minerals would also react exothermically with Cl₂ (i.e., the halogen gas) forming HCI (i.e., the acid) and further dissolving the rocks/minerals.

It should be understood that processes of the invention may include variation to those described above that would be recognized by those of ordinary skill in the art.

Processes of the invention can have a number of advantages. One benefit is that the process removes carbon dioxide from the atmosphere which leads to a number of environmental advantages. Another benefit of the process is that some of the steps (e.g., the formation of HCI in a fuel cell) produce useful energy that can be used in other aspects of the process. The energy may be generated, for example, from hydrogen production during the dissolution of reduced minerals (e.g., minerals comprising iron), electricity production through a fuel cell (e.g., FeCl₂-HCI-O₂; FeCl₂-O₂, or heat generated during the dissolution of silicate rocks and minerals. Because the energy cost is a large component of the total cost for most conventional CO₂ capture and storage technologies, the low energy cost of the process represents a valuable technological advancement. An additional benefit of the process is the co-production of valuable chemicals with alkaline or basic solutions, which are used to capture CO₂. For example, the embodiments illustrated in FIGS. 2A-2B involves the co-production of Cl₂ gas and H₂ gas with the reaction of CO₂ and NaOH to form NaHCO₃. In another example (e.g., as shown in FIGS. 3A-3B), valuable acid solutions (e.g., acetic acid) are co-produced with the reaction of CO₂ and metal hydroxides (M-OH) to form MHCO₃. The co-production of valuable chemicals is a significant advantage of the process as the sale of such chemicals can be profitable.

The following examples are meant to be illustrative and are not limiting in any way.

### Example 1

The following diagrams illustrate examples of processes according to embodiments of the invention. Diagram A shows carbon dioxide capture and acid disposal. Calcium has been used to represent any metal found in silicate rocks. Diagram B shows a process with steps to recover energy through the oxidation of silicate rocks. Iron has been used to represent any metal found in silicate rocks that can be oxidized (e.g., iron and manganese). The chemistry for the process in Diagram B is shown below the figure.

### Step 1a: Acid removal HCI formation, and CO2 capture (See example 1 diagram below)

*Na⁺ + Cl⁻ + H₂O →Na⁺ + OH⁻ + ½ Cl₂ + ½ H₂*

### Step 1b: Production of HCI

*½ Cl₂ + ½ H₂ → HCI*

### Step 1c: CO₂ Capture

*NaOH + CO₂* →*NaHCO₃*

### Step 2: Dissolution of mineral and acid neutralization

In step 2. a portion of the Fe₂SiO₆ will react with HCI to form FeCI₃ (reaction 2a), while another portion of the Fe₂SiO₆ will react with HCI to form FeCI₂ (reaction 2b). For the purposes of this example, we assume that 1/3 of the mineral will react to form FeCI₃ while the other 2/3 will react to form FeCI₂.

### Reaction 2a:

*HCl*+¹/₆*Fe*₂*SiO*₄→⅓*FeCl*₃+¹/₆*SiO*₂+⅓*H*₂*O*+¹/₆*H*₂

### Reaction 2b:

*¼ Fe₂SiO₄ + HCI → ½ FeCl₂ + ¼ SiO₂ + ½ H₂O*

### Step 3: Energy Recovery through H₂ and FeCl₂ oxidation

In step 2, the Fe₂SiO₄ was reacted with HCI to form either H₂ or FeCl₂. As a result, step 3 employs two separate fuel cells to recover energy by oxidizing both the H₂ and FeCl₂ separately.

### Reaction 3 a:

¹/₆*H*₆+¹/₁₂*O*₂→¹/₆*H*₂*O*

### Reaction(s) 3b:

NOTE: When FeCI₂ is run in a fuel-cell, the reaction requires the presence of an additional ½ a mole of HCI for each mole of NaOH originally produced.

*½ NaCI + ½ H₂O → ½ HCI + ½ NaOH*

*½ NaOH + ½ CO₂ → ½ NaHCO₃*

½*FeCl₂ +* ½ *HCl* + ⅛*O₂* → ½ *FeCl₃* + ¼ *H₂O*

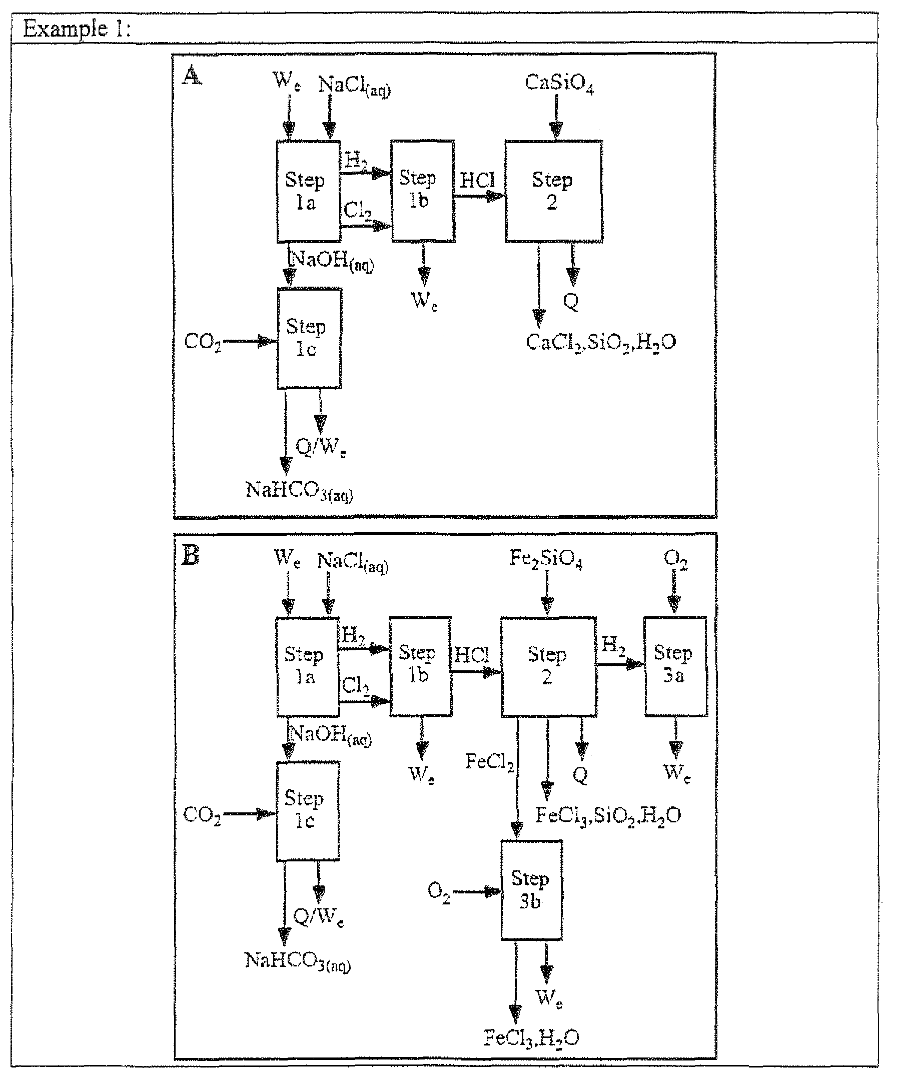

### Example 2

The following diagram illustrates an example of a process according to an embodiment of the invention. In this process silicate rocks and minerals are oxidized using chlorine gas.

### Step 1a: Acid removal, HCI formation, and C02 capture

*Na⁺ +Cl⁻ +H₂O → Na⁺ + OH⁻ + ½Cl₂ + ½H₂*

### Step 1b: Production of HCI

²/₆*Cl*+²/₆*H*₂→⁴/₆*HCl*

### Step 1c: CO₂ Capture

*NaOH + CO₂ → NaHCO₃*

### Step 2: Dissolution of mineral and acid neutralization.

### Reaction 2a:

⁴/₆*HCl*+¹/₆*Fe*₂*SiO*₄+¹/₆*Cl*₂→²/₆*FeCl*₃+¹/₆*SiO*₂+²/₆*H*₂*O*

### Step 3: Energy Recovery through H₂ and FeCI₂ oxidation

The additional 1/6H₂ unit produced in step 1a and not employed to form HCl in step I b is oxidized with O₂ for form 1/6H₂O and recover some electrical work.

### Reaction 3a:

¹/₆*H*₂+¹/₁₂*O*₂→ ¹/₆*H*₂

### Net reaction:

¹/₁₂*O*₂+*NaCl*+¹/₂*H*₂*O*+*CO*₂+¹/₆*Fe*₂*SiO*₄→*NaHCO*₃+¹/₃*FeCl*₃+¹/₆*SiO*₂

Having thus described several aspects and embodiments of this invention, it is to be appreciated various alterations, modifications and improvements will readily occur to those skilled in the art. Such alterations, modifications and improvements are intended to be part of this disclosure, and are intended to be within the spirit and scope of the invention. Accordingly, the foregoing description and drawings are by way of example only.

The present invention in particular pertains to the following subject-matter:
1. A process for capturing carbon dioxide comprising:
   providing water;
   processing the water to generate acidic solution and alkaline solution;
   neutralizing the acidic solution; and
   capturing carbon dioxide from a source of carbon dioxide with the alkaline solution.
2. The process of stem 1, wherein the carbon dioxide is captured by reacting with the alkaline solution to form a reaction product and the reaction product is not used to re-generate the alkaline solution.
3. The process of item 1, wherein the carbon dioxide is captured by reacting with the alkaline solution to form a reaction product and further comprising disposing the reaction product.
4. The process of item 3, wherein the reaction product is disposed of in a body of water or land-based environment.
5. The process of item 1, wherein the water is processed to generate the acidic solution and alkaline solution simultaneously.
6. The process of item 1, comprising providing natural salt water.
7. The process of item 1, wherein the water is provided from a body of water selected from the group consisting of an ocean, a sea, and a lake.
8. The process of item 1, wherein the water includes a sufficient concentration of ions that a salt does not need to be added.
9. The process of item 1, further comprising adding a salt to the water to form artificial salt water prior to processing the water to generate acidic solution and alkaline solution.
10. The process of item 1, wherein the water is processed to generate acidic solution and alkaline solution using an electrolytic step.
11. The process of item 1 ,wherein the water is processed to generate acidic solution and alkaline solution using a thermal step.
12. The process of item 10, wherein the electrolytic step produces a halogen gas, a hydrogen gas, and sodium hydroxide.
13. The process of item 12, wherein the halogen gas and the hydrogen gas react to form the acidic solution.
14. The process of item 12, wherein the halogen gas is chlorine gas.
15. The process of item 12, wherein the halogen gas and the hydrogen gas react in a fuel cell to form the acidic solution and produce electricity.
16. The process of item 1, wherein the water is processed to generate acidic solution and alkaline solution using an electrodialysis process.
17. The process of item 1, wherein the alkaline solution comprise sodium hydroxide.
18. The process of item 1, wherein capturing the carbon dioxide comprises adding the alkaline solution to a body of water.
19. The process of item 1, wherein capturing the carbon dioxide comprises reacting the carbon dioxide with the alkaline solution.
20. The process of item 1, wherein capturing the carbon dioxide comprises exposing the alkaline solution to a waste stream of carbon dioxide from a point source.
21. The process of item 20, wherein the point source is selected from the group consisting of power plants, chemical plants, natural gas fields, oil fields, and industrial sites.
22. The process of item 1, wherein capturing the carbon dioxide comprises reacting atmospheric carbon dioxide with the alkaline solution through a spray tower.
23. The process of item 1, wherein neutralizing the acidic solution comprises reacting the acidic solution with a reactive species.
24. The process of item 23, wherein the reactive species are provided from a rock and/or mineral source.
25. The process of item 24, wherein the acidic solution reacts with the rock and/or mineral source in situ.
26. The process of item 25, further comprising flowing the acidic solution across and/or through a rock and/or mineral source to react the acidic solution with the rock and/or mineral source.
27. The process of item 24, wherein the rock and/or mineral source is selected from the group consisting of silicate rocks, silicate minerals, mafic minerals, magnetite, mafic rocks, ultramafic rocks, serpentinites, basalts, and iron ores.
28. The process of item 24, wherein the rock and/or mineral source comprises iron.
29. The process of item 24, wherein the rock and/or mineral source is dissolved in an acid.
30. The process of item 23, wherein the acidic solution and the reactive species react to form hydrogen gas.
31. The process of item 30, further comprising collecting the hydrogen gas.
32. The process of item 24, wherein the acidic solution and the reactive species react to form a product comprising Fe²⁺
33. The process of item 32, wherein Fe²⁺ is oxidized in a fuel cell reaction to produce electricity.
34. The process of item 1, further comprising separating the acidic solution and alkaline solution,
35. The process of item 1, comprising capturing carbon dioxide by dissolution of the carbon dioxide into the alkaline solution.
36. A process for capturing carbon dioxide and generating chlorine gas and hydrogen gas comprising:
   providing water;
   processing the water to generate sodium hydroxide, chlorine gas, and hydrogen gas; and
   capturing carbon dioxide from a source of carbon dioxide by reacting the carbon dioxide with the sodium hydroxide to form NaHCO₃ and/or Na₂CO₃.
37. The process of item 36, comprising providing natural salt water.
38. The process of item 36, wherein the water is provided from a body of water selected from the group consisting of an ocean, a sea, and a lake.
39. The process of item 36, wherein the water includes a sufficient concentration of ions that a salt does not need to be added.
40. The process of item 36, further comprising adding a salt to the body of water to form artificial salt water prior to processing the water.
41. The process of item 36, wherein the water is processed to generate chlorine gas, hydrogen gas, and sodium hydroxide using an electrolytic step.
42. The process of item 36, further comprising oxidizing the hydrogen gas with atmospheric oxygen to form water and electricity.
43. The process of item 36, comprising oxidizing the hydrogen gas with atmospheric oxygen in a hydrogen gas turbine to form water and electricity.
44. The process of item 36, comprising oxidizing the hydrogen gas with atmospheric oxygen in a fuel cell to form water and electricity.
45. The process of item 36, wherein the water is processed to chlorine gas, hydrogen gas, and sodium hydroxide using a thermal step.
46. The process of item 36, wherein capturing the carbon dioxide comprises adding the sodium hydroxide to a body of water.
47. The process of item 36, wherein capturing the carbon dioxide comprises reacting the carbon dioxide with the sodium hydroxide.
48. The process of item 36, wherein capturing the carbon dioxide comprises reacting the carbon dioxide with the sodium hydroxide to form sodium bicarbonate and/or disodium carbonate.
49. The process of item 36, wherein capturing the carbon dioxide comprises exposing the sodium hydroxide to a waste stream of carbon dioxide from a point source.
50. The process of item 49, wherein the point source is selected from the group consisting of power plants, chemical plants, natural gas fields, oil fields, and industrial sites.
51. The process of item 36, wherein capturing the carbon dioxide comprises reacting atmospheric carbon dioxide with the sodium hydroxide through a spray tower.
52. The process of item 36, further comprising selling the chlorine gas.
53. A process for capturing carbon dioxide comprising:
   providing a salt solution;
   processing the salt solution to generate a metal hydroxide and an acidic solution; and
   capturing carbon dioxide from a source of carbon dioxide by reacting the carbon dioxide with the metal hydroxide to form metal bicarbonate or metal carbonate.
54. The process of item 53, wherein a salt solution is provided from a natural source.
55. The process of item 53, wherein the salt solution includes a sufficient concentration of ions that a salt does not need to be added.
56. The process of item 53, further comprising adding a salt to the solution to form an artificial salt solution prior to processing the water to generate an acidic solution and an alkaline solution.
57. The process of item 53, wherein the salt solution is processed to form a metal hydroxide solution and an acidic solution.
58. The process of item 53, wherein the salt solution is processed to produce an organic acid and sodium hydroxide.
59. The process of item 53, wherein capturing the carbon dioxide comprises adding the metal hydroxide to a body of water.
60. The process of item 53, wherein capturing the carbon dioxide comprises reacting the carbon dioxide with the metal hydroxide.
61. The process of item 53, wherein capturing the carbon dioxide comprises reacting the carbon dioxide with the metal hydroxide to form a metal bicarbonate and/or metal carbonate.
62. The process of item 53, wherein capturing the carbon dioxide comprises reacting the carbon dioxide with sodium hydroxide to form a metal bicarbonate and/or metal carbonate.
63. The process of item 53, wherein capturing the carbon dioxide comprises exposing the metal hydroxide to a waste stream of carbon dioxide from a point source.
64. The process of item 63, wherein the point source is selected from the group consisting of power plants, chemical plants, natural gas fields, oil fields, and industrial sites.
65. The process of item 53, further comprising selling the acidic solution.
66. A process for capturing carbon dioxide comprising:
   providing water;
   adding ash obtained from a source of biomass to the water to form alkaline solution; and
   capturing carbon dioxide from a source of carbon dioxide with the alkaline solution.
67. The process of item 66, wherein the ash is obtained by burning biomass.
68. The process of item 66, wherein the ash is obtained by gasifying biomass.
69. The process of item 66, wherein the water is provided from a body of water selected from the group consisting of an ocean, a sea, and a lake.
70. The process of item 66, wherein capturing the carbon dioxide comprises adding the alkaline solution to a body of water.
71. The process of item 66, wherein capturing the carbon dioxide comprises reacting the carbon dioxide with the alkaline solution,
72. The process of item 66, wherein capturing the carbon dioxide comprises exposing the alkaline solution to a waste stream of carbon dioxide from a point source.
73. The process of item 72, wherein the point source is selected from the group consisting of power plants, chemical plants, natural gas fields, oil fields, and industrial sites.

## Claims

1. A process for capturing and storing carbon dioxide comprising:
a) subjecting salt water to salt water processing, the salt water processing comprising
i) a first electrochemical step, wherein the first electrochemical step produces a chlorine gas, a hydrogen gas, and aqueous sodium hydroxide, and
ii) a second electrochemical step, wherein the second electrochemical step comprises reacting the chlorine gas and the hydrogen gas cell to produce HCI;
b) reacting the aqueous sodium hydroxide with carbon dioxide to capture the carbon dioxide; and
c) neutralizing the HCI without causing CO₂ to degas into the atmosphere.

2. The process of claim 1, wherein the first electrochemical step comprises a diaphragm cell process.

3. The process of claim 1, wherein the first electrochemical step comprises electrodialysis.

4. The process of claim 3, wherein electrodialysis comprises bipolar membrane electrodialysis.

5. The process of claim 1, wherein HCI and electricity are produced in a fuel cell.

6. The process of any of claims 1-5, further comprising oxidizing at least some of the hydrogen gas with oxygen to form water and electricity.

7. The process of claim 6, wherein the hydrogen gas is oxidized with oxygen in a hydrogen gas turbine to form the water and electricity.

8. The process of claim 6, wherein the hydrogen gas is oxidized with oxygen in a fuel cell to form the water and electricity.

9. The process of any of claims 1-8, wherein the salt water comprises salt water provided from a natural source.

10. The process of claim 9, wherein the natural source comprises a body of water that comprises an ocean, a sea, a lake, or river.

11. The process of any of claims 1-8, wherein the salt water is formed by a process comprising adding salt to water to form an artificial salt solution.

12. The process of any of claims 1-11, wherein the carbon dioxide comprises carbon dioxide from a waste stream of carbon dioxide from a point source.

13. The process of claim 12, wherein the point source is selected from the group consisting of power plants, chemical plants, natural gas fields, oil fields, and industrial sites.

14. The process of any of claims 1-13, wherein reacting the alkaline solution with carbon dioxide to capture carbon dioxide comprises reacting the alkaline solution with carbon dioxide through a spray tower.
